# EUROPEAN PATENT APPLICATION

(11) **EP 4 357 948 A1**
(43) Date of publication of application: **24.04.2024**
(21) Application number: 22202579.3
(22) Date of filing: 19.10.2022
(51) Int. Cl.: G06F 21/34, G06F 21/57

(54) **METHOD AND SYSTEM TO MITIGATE AUTHENTICATOR DEVICE MISUSE**

(71) Applicant: THALES DIS CPL USA, INC., Austin, TX 78759 (US)
(72) Inventor: JOSHI, Pankaj, Haryana (IN)
(74) Representative: Lotaut, Yacine Diaw

(57) **Abstract**

Provided is a middleware client (200) to mitigate misuse of an authenticator device (5) from an unauthorized application by way of a rule based enforcement engine. Components of the engine include a rule writer (230) to write rules to a whitelist (220); an enhanced middleware library (210) that controls a loading of a middleware library for the authenticator device, and a middleware kernel component (240) to protect the rules in the white list. The kernel component intercepts a system call to load the middleware library by a calling application and establish if the application is authorized to the enhanced middleware library (210), and intercepts follow-up system calls to access the set of rules in the whitelist (220) and control an access type of the enhanced middleware library (210) for the calling application to use the authenticator device.

## Description

### TECHNICAL FIELD

The present invention relates generally to smart card security, and more specifically, to smart card middleware that monitors and controls smart card usage, for example, in an organization leveraging PKI based Multi-Factor Authentication (MFA) and Identify Access & Management (IAM) policies.

### BACKGROUND

A smart card is a secure microcontroller that is used for generating, storing and operating on cryptographic keys. Smart card authentication provides users with smart card devices for the purpose of authentication. Users connect their smart card to a host computer. Software on the host computer interacts with the keys material and other secrets stored on the smart card to authenticate the user. Smart card based authentication is more secure than using password. There is an additional layer of PIN protection in smart card, which ensure that only the user of smart card can use it while gaining access to an asset or computer system. Smart cards interact with various high level applications using various standard specifications. Although, smart cards support Public Key Infrastructure (PKI) workflow, a smart card implementation is an open standard with no valid access control checks in place. An open standard is a standard that is freely available for adoption, implementation and updates. Middleware software is open and provides the interface between the smart card and high level applications that use the smart card resources. This means any application can any time load the smart card middleware software to interact with the smart card.

In a corporate network, there are legitimate applications, which are allowed to load middleware software and perform PKI operations using keys in smart cards. The smart cards are provisioned with keys and the corporate servers are enabled with public keys of all users, which enables the corporate applications to use PKI and identify a legitimate client who is using his/her private keys to do signing or other PKI operations. This enables the corporate applications to use PKI and identify a legitimate client who is using his/her private keys to do signing or other PKI operations

However, malicious applications can also interact with smart card to exploit and gain unauthorized access. This is because the Middleware software is open for consumption by any application; legitimate or illegitimate. Hence, its presence opens an attack surface for the hackers to use the middleware and try to use the keys to gain unauthorized access in an enterprise. A hostile or unknown application may try to leverage public information about the middleware API, and try to gain the PIN access to use the private keys of the smart card. The keys in the smart card are a critical asset for authentication and authorization that the Identification and Access Management (IAM) policies rely upon. Thus, any attacker can write an application to use and gain smart card information, including the secret keys stored in the card. Moreover, this whole operation can happen silently and the smart card user or the Information Technology (IT) team may not know about this event on various computer systems.

A need therefore exists for safely and securely managing interaction of endpoints using Smart Card-based PKI authentication.

### SUMMARY

Provided is a computer security system and method to detect Public Key Infrastructure (PKI) based threats against authenticator devices, for example, a smart card. The method introduces various components, which will allow only an authorized application to interact with an authenticator device such as a smart card. One component, is an enhanced middleware library that provides intelligence to identify which applications are allowed by IT administration, and what level of authorization is allowed for a particular application. The enhanced middleware is responsible to interact with authenticator device, so when any unauthorized application attempts to load the enhanced middleware to interact with the authenticator device, the enhanced middleware library will not allow the interaction. Conversely, an authorized application that is permitted to do read operations on the smart card will be allowed a read only operation on the card, and any write operation, like creation on new objects or deletion of object, will be restricted and the enhanced middleware will prevent those actions. The enhanced middleware library provides a whitelisting capability along with hardening rules to allow access at the smart card object level. The method provides a way to prevent all unauthorized interaction with smart card, and the potential threats targeting the smart card users in an enterprise environment.

In one embodiment, a system is provided to mitigate misuse of an authenticator device (5) by enforcing a rule based engine. The authenticator device can be one among a smart card, an eToken, a USB module, or security key.

On a server side a middleware server (250) establishes rules on applications for authenticator device (5) usage. A user interface (260) coupled to the middleware server (250) provides for entry of the rules. On a client side a middleware client (200) comprises a whitelist (220), a rule writer (230), an enhanced middleware library (210), and a middleware kernel component (240).

The whitelist (220) contains rules for accessing the authenticator device (5), wherein the rules therein indicate which applications and users have access to the authenticator device (5). The rule writer (230) when connected to the middleware server (250) retrieves a set of rules there from and writes the set of rules to the whitelist (220).

The enhanced middleware library (210) controls a loading of a middleware library, whereby it allows or denies the loading if said application is an entry in the whitelist (220). When the application is allowed and loads the middleware library, the enhanced middleware library (210) further retrieves and enforces the set of rules on the application for using the authenticator device (5). When the application is denied, the enhanced middleware library (210) does not load the middleware library and the application is denied access to the authenticator device.

The middleware kernel component (240) protects the set of rules in the white list (220) by intercepting a system call to load the middleware library by the application, and intercepting follow-up system calls by the enhanced middleware library (210) to read the set of rules in the whitelist (220) for determining read/write access of the application to the authenticator device. The middleware kernel component (240) allows only the rule writer (230) and the enhanced middleware library (210) access to the whitelist (220).

In some embodiments, the loading of the middleware library by the application is denied by default when the whitelist does not include an entry for the application and when no rules are provided for the application.

In some embodiments, when the application is allowed and loads the middleware library, the enhanced middleware library (210) retrieves rules from the whitelist (220) indicating how the application may access and use the authenticator device (5).

In some embodiments, the whitelist (220) contains a list of applications and rules associated with each application, wherein a rule per application defines: how an executing application is identified, what kind of access to the authenticator device (5) is provided, when access to the authenticator device (5) is allowed, and where the authenticator device (5) is accessible.

In some embodiments, the step for how an executing application is identified includes determining application attributes comprising signature verification of application, path of application binary, or process ID of the application. In some embodiments, the enhanced middleware library (210) matches criteria in the whitelist (220) with actual attributes of the application that is executing.

In some embodiments, the kind of access provided to the authenticator device (5) includes access to read only, write only, or read/write operations thereon. The kind of access provided to the authenticator device (5) includes access to PKI operations thereon such as encrypt, decrypt, hash, authenticate, sign and signature verify. The kind of access provided to the authenticator device (5) includes access to PKI objects thereon such as certificates, keys, PINs, and ID.

In some embodiments, the middleware server (250) is configured to recognized one or more endpoints by IP addresses each with their own instance of the rule writer (230), and each rule writer (230) knows an IP addresses of the the middleware server (250) for secure communications, whereby the middleware server (250) pushes the whitelist (220) to the rule writer (230) after establishment of the secure communications.

In some embodiments, the enhanced middleware library (210) prevents unauthorized and unrecognized apps from accessing authenticator device (5) functions, objects or resources embedded on the authenticator device (5).

In another embodiment a middleware client (200) is provided to mitigate misuse of a authenticator device (5) by way of a rule based enforcement engine. It comprises a whitelist (220), a rule writer (230), an enhanced middleware library (210), and a middleware kernel component (240) to protect the set of rules in the white list (220). It does this by intercepting the system call to load the middleware library by the application and intercepting follow-up system calls by the enhanced middleware library (210) to access the set of rules in the whitelist (220), and allowing only the rule writer (230) and the enhanced middleware library (210) access to the whitelist (220).

In some embodiments, the whitelist (220) contains a list of applications and rules associated with each application, wherein a rule per application defines: how an executing application is identified using application attributes such as signature verification of application, path of application binary, and process ID of the application, and what kind of access to the authenticator device (5) is provided, including: access to read only, write only, or read/write operations thereon, access to PKI operations thereon such as encrypt, decrypt, hash, authenticate, sign and signature verify, and access to PKI objects thereon such as certificates, keys, PINs, and ID.

In some embodiments, the rule per application further defines whether access to the authenticator device (5) is allowed for said application and for a particular user such as time and date, and where the authenticator device (5) is accessible by the application and by the particular user such as geographic location, domain, and network.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG.** 1 depicts a system to mitigate authenticator device misuse by rule enforcement in accordance with one embodiment;
**FIG. 2** is a workflow diagram for configuring rule enforcement within the system of FIG. 1, and more particularly, how rules flow from server side to client side by way of administrative whitelisting in accordance with one embodiment;
**FIG 3** depicts an exemplary end-to-end flow of rules and decision enforcement on an application to prevent authenticator device misuse in accordance with an embodiment;
**FIG 4** provides example rules and a pictorial representation of object visibility to a specific calling application in accordance with an embodiment;
**FIG 5** presents an exemplary rule type of "allow binary by path" for an application entry in a whitelist in accordance with an embodiment;
**FIG 6** presents an exemplary rule type of "allow binary by signature" for an application entry in a whitelist in accordance with an embodiment; and
**FIG. 7** depicts an example of an authentication client tool that is an application limited by rule enforcement to only show token information for the authorized user in accordance with administrative whitelisting in accordance with one embodiment; and
**FIG. 8** depicts an exemplary diagrammatic representation of a machine and hardware platform to perform the methods herein in accordance with an embodiment.

Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Provided herein is a method and system to prevent misuse of an authenticator device, such as a smart card, by enforcing a rule based engine, which defines a map between authorized applications and their targeted allowed objects in smart cards. In particular, a middleware software/library is enhanced with intelligence logic, that in conjunction with other components, controls and limits interaction with the authenticator device according to a rule file. The rule based engine is configured by IT administrators to allow authorized application to execute, and block unauthorized applications from running. The inventive solution prevents misuse of the authentication device for various scenarios. For example, hackers or attackers will no longer be able to plant a Denial of Service (DOS) attack presenting invalid PINs to block the cards at organization level. At attacker will no longer be able to steal user PIN by various means or by tricking a user to enter their PIN to imposter application and later on use it to gain network or access to critical infrastructure, because the unauthorized application is blocked at the onset from loading middleware. It prevents attackers from hampering the whole PKI based MFA, and effectively disrupts any potential attack plan to bypass IT, including IAM, PKI and MFA mechanisms. Moreover, the inventive solution prevents the attacker from gaining knowledge of the type of Identity and Access Management (IAM) policies implemented internal to an organization.

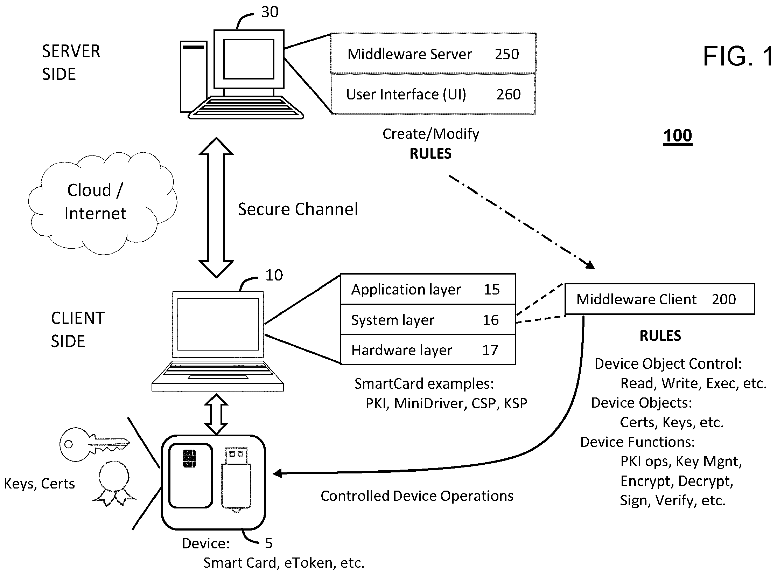

**FIG. 1A** depicts a system **100,** in accordance with one embodiment, to mitigate misuse of an authenticator device 5 by rule based enforcement. The authenticator device 5 can be one of a smart card, an eToken, a USB module, or a security key. On the server side 30, a middleware server (250) establishes rules on applications for using the authenticator device, and a user interface (260) coupled to the middleware server (250) to provide entry of rules. The IT Admin on the server side will define the overall organization strategy and make rules, which are enforced on all systems using an authenticator device 5 (e.g. smart card, eToken, USB, etc.) for corporate PKI and authentication needs. The middleware server 250 is communicatively coupled to an endpoint machine 10 on the client side, for example, over an secure internet channel, such as HTTPS. The middleware server 250 and UI 260 help IT admin to create such rules and enforce them, which include a list of applications, access scope and hardening.

In a corporate setting, the IT administrators on the server side generally know what applications their employees on the client side will be using with their company issued equipment and what type of authenticator device is required. For example, IT administration knows which applications require use of the authenticator device 5 (e.g. smart card) on an endpoint machine 10, and are aware of the equipment being used (e.g., laptop for business users, workstations for engineers, etc.). IT admin often manages the installation and update of user applications on those machines over the secure channel, including expected interactions on the endpoint machine 10 with the authenticator device 5. They also know which applications provide the most value and which require sensitive information from the authenticator device 5 because they created the keys, the certificates and installed the applets and objects on the authenticator device 5 that were issued to the user.

Administrators use the UI 260 to create and modify rules that will be communicated to the respective user equipment within the organization by way of the middleware server 250, to not only prevent unauthorized or unknown applications from accessing the smart card, but control the access and use of the smart card functions, objects and resources. Based on the needs IT administration, they will define a list of applications and indicate their respective access to smart card. For every application a rule will be defined, which will have information related to: i) how the correct application will be identified, like based on the signing verification, path of binary etc, ii) what kind of access will be provided, like read only or read/write, and iii) accessibility of objects for specific application, for instance, if the card is having 5 certificates, and app-1 only requires cert-1, the rule will help middleware to only allow access to cert-1 for App-1. With a read only access type, the application will be able to see only specific certificates which are meant for its usage. With a Read/Write access type, applications will be provided full privileges and access to provisioning remote system.

On the client side, the endpoint machine10 (e.g. laptop, desktop, workstation) is communicatively coupled over the secure channel to the server side 30 to receive the rules from IT administration. These rules determine which applications are authorized or approved to access the authenticator device 5, and what type of device operations and content may be accessed. The typical endpoint machine 10 includes an application layer 15, a system layer 16, and a hardware layer 17. Applications, such as client authentication tools, that use the smart card reside in the application layer 15. Middleware to communicate with the authenticator device 5 resides below, in the system layer 16. Middleware is generally any software that is not a device driver, an operating system kernel, or an application. Middleware components can exist within various permutations of a software stack: such as directly over device drivers, residing above an operating system, tightly coupled with an operating system package from an off-the-shelf vendor, residing above other middleware components, or some combination of the above.

As shown, the middleware client 200 is provided in the system layer 16. This middleware client 200 manages interactions between applications that wants to access the authenticator device 5 and the underlying system software layers, such as the operating system and device driver layers that manage communication with the smart card reader and device. Here, the middleware client 200 obtains the rules from the middleware server 300 and thereafter implements and enforces the rules on the endpoint 10. The rules are stored in a file on the local endpoint 10, and include instructions for authenticator device object control (read, write, execute, etc.), resource usage (e.g. certificates, keys), and functions (key management and PKI operations such as encrypt, decrypt, hash, sign, verify, etc.).

In one embodiment, the authenticator device 5 is a smart card 5, which is a physical card that has an embedded integrated chip that acts as a security token. Smart cards are designed to be tamper-resistant and use encryption to provide protection for in-memory information. Cards with microcontroller chips can perform on-card processing functions and manipulate information in the chip's memory. Smart cards are also used as cryptographic tokens for a number of authentication purposes, including physical access to buildings, rooms, computer and network access, and some secure remote access solutions, such as virtual private networks (VPN), and portals. Using smart cards for authentication dramatically increases security.

Smart cards that require personal identification numbers (PINs) provide two-factor authentication, where the user who attempts to log on must possess the smart card and know its PIN. Multi-factor Authentication (MFA) is an authentication method that requires the user to provide two or more verification factors to gain access to a resource. With MFA, a user is granted access only after successfully presenting several separate pieces of evidence to an authentication mechanism - usually from at least two of the following three categories: knowledge--something one knows such as a password or personal identification number (PIN), possession--something one has such as a cryptographic identification device, smart card or secure token, and inherence--biometrics such as fingerprints, iris, face, palm print, etc. The goal of MFA is to create a layered defense and make it more difficult for an unauthorized person to access a target such as a physical location, computing device, network or database.

Public Key Infrastructure (PKI) certificate-based smart cards with MFA offer a single solution for strong authentication and applications access control, including remote access, network access, password management, network logon, as well as corporate ID badges, magnetic stripes and proximity. This is because smart card technology contains a cryptographic module. This module facilitates the generation and security of public key infrastructure (PKI) keys and certificates that are used to authenticate operating systems and applications, sign documents, or encrypt data, such as files or emails. The solution provided by components of the system 100 enhances smart card middleware capabilities to generate usage events, and help prevent PKI specific threats on smart card usage.

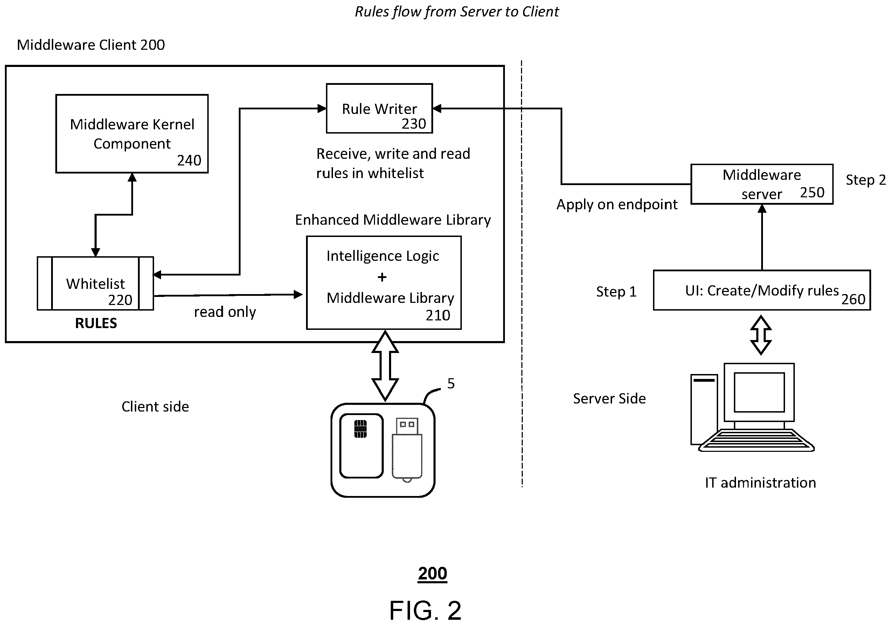

**FIG. 2** is a workflow diagram for configuring rule enforcement within the system of FIG. 1, and more particularly, depicts how communications flow from server side to client for enabling administrative whitelisting of the rule based engine in accordance with one embodiment. On the server side, IT administrators create and/or modify rules by way of the UI 260 component as seen by step 1. The middleware server 250 thereafter applies the rules to the endpoint machine as seen in step 2 by way of communication with the Rule Writer 230.

### SERVER SIDE

In one embodiment, the middleware server 250 is a web application with forms to help administrators define rules in a specific format. The admin will be able to see all end points where the middleware client 200 is installed including the rule writer 230. The IT Admin defined the rules and pushes to either all or selected end points. The Rule Writer 230 receives rule files pushed by the middleware server 250 and then writes the rules to the rule file in the local system (endpoint). The Rule writer 230 will then respond with acceptance to let the middleware server 250 know about the success or failure status of the rules pushed.

The Rule Writer 230 creates rules at the client side. It is responsible to write the rules in specific format in the rule file. The Rule Writer 230 retrieves the rules from the Middleware Server 250 over a secure channel. Each rule contains a list of names of allowed applications (namely, those permitted to access smart card), scope of access (read or write), and hardening rules around authenticator device objects, resources and operations. On example of a hardening rule, is that Application-1 can only see and use certificate-1 even though there are other certificates on the authenticator device. The Application-1 can only see sertificate-1 to operate and there of the private/public keys associated with certificate-1. The rules can be applied by its binary checksum, name, path, certificate, signing certificate etc. The rules flow from Middleware Server Component to each endpoint client having the Rule Writer Component installed.

In one embodiment, the Rule Writer 230 is a light weight agent, for instance, a Jenkins slave to the middleware server 250 in charge of scheduling jobs, assigning slave nodes, and sending builds to execute. Here, the Rule Writer 230 knows the IP address of the server for establishing communication, and the middleware server 250 knows the IP addresses for all its endpoints. Each endpoint machine will have its own Rule Writer. All these endpoints are visible to the middleware server, and the IT admin can create a rules file, and schedule the middleware server 250 to push the files to the Rule Writer 230 on the client side. The communication is secured over HTTPS with TLS and known PKI management techniques and tools, to ensure that only the intended rules established on the server side are securely received and processed on the client side.

### CLIENT SIDE

On the client side, the middleware client 200 comprises an enhanced middleware library 210, a whitelist 220, a rule writer 230, and a middleware kernel component 240. The whitelist 220 contains the rules set by IT administration for accessing the authenticator device 5, wherein the rules indicate which applications and users have access to it. The whitelist 220 is a file stored on the local endpoint 10 that contains the rules and other descriptive information. The rule writer 230 when connected to the middleware server 250 retrieves the set of rules there from and writes the set of rules and other descriptive information to the whitelist 220.

The rule writer 230 and middleware library 210 access the rules directly in the whitelist 220 directly, seen by the bi-directional access arrow and uni-directional acccess arrow, respectively. The middleware kernel component 240 does not communicate with the rule writer 230 and middleware library 210. Notably, however the middleware kernel component 240 observes which of these components attempts to access the whitelist 220 and/or rules therein. It will allow access to the rule writer 230 and middleware library 210 and restrict access to other software modules or components. Also the middleware library 210 can only read the rules as seen by the one directional access arrow.

The middleware kernel component 240 serves to protect the white list 220. It provides only the rule writer 230 and the enhanced middleware library 210 with allowed access to the whitelist 20. The middleware kernel component 240 provides the rule writer 230 with "write" access to the white list 220 when IT administration sets the rules. It also provides it read access to confirm or check the rules have been written and saved. However, the middleware kernel component 240 provides the enhanced middleware library 210 with only "read" access to the white list 220. The middleware kernel component 240 is in effect, a system driver to protect and control access to the file containing the rules on the local endpoint 10. It will deny access to the rule file for all of the applications except for the rule writer 230. Once the rules are written on all end points, the enhanced middleware library on each endpoint will start allowing and denying the access based on the defined rules in the whitelist 220.

The middleware kernel component 240 is effectively in practice a system driver to protect the rules file which contain the list of allowed application, access scope of the middleware library, and hardening rules on the authenticator device with respect to access and use of individual objects in the authenticator device the application intends, and is proscribed, to work with. As a kernel driver, it hooks system calls on the middleware library for both the rule writer 230 and the enhanced middleware library 210. In the former, it allows the file operation to the rule writer 230, to allow creation of rules on end points in the whitelist 220. In the later, it allows a read operation by enhanced middleware library, such that the library may access the whitelist 220 file and inquire on allow/disallow and limit the scope of smart card access to any calling application based on the rules defined in the rule file. The middleware kernel component 240 will deny all other interaction to the rule file, to ensure the integrity of the file.

Briefly, as will be explained with the next figure, the middleware kernel component 240 enforces this protection by intercepting system calls from the application attempting to communicate with the authenticator device. For instance, it will watch all the system calls related to reading and writing of the whitelist 220 and generate usage events. For example, if any high-level application were to make a read system call, the kernel component will monitor it, and only allow the applications which are allowed to read it; it will block others.

The enhanced middleware library 210 comprises the device middleware library with additional intelligence logic; hence, the middleware is "enhanced". The enhanced middleware library 210 i) references a predefined list of applications that are authorized to interact with authenticator device, ii) establishes a scope of access on authenticator device resources, whether it is read-only or read-write, and iii) provides hardening around specific objects (keys and certificates) in the authenticator device. Hardening is the process of securing a system by reducing its surface of vulnerability, here, exposure of the smart card to unauthorized applications.

The enhanced middleware library 210 controls a loading of a middleware library, whereby it allows or denies the loading if said application is an entry in the whitelist (220). The intelligence logic provides for this controlling aspect because it is inherently coupled to the middleware kernel component 240 by way of hooked system calls. It will then either allow or deny the loading of the middleware library according to whether the entry for that application is present in the whitelist, or any other instructions. When the application is allowed and loads the middleware library, the intelligence logic is thereafter effectively permitted (by virtue of the middleware kernel component 240 continuing to allow read access to the middleware library) to retrieve (via read-only access) and enforce the set of rules on the application for using the authenticator device. Conversely, when the application is denied, because there is no application entry in the whitelist, the intelligence logic does not load the middleware library and the application is denied access to the authenticator device. The description in the following figure should provide more insight into the underlying mechanisms of the kernel component.

The enhanced middleware library is 210 an enhancement to current state of the art middleware design. The enhancement is the added logic that provides intelligence to detect and identify the application trying to load the middleware library. The logic allows it to retrieve and identify binary attributes of the application such as: checksum, name, and path, invoked by, signing information, signed by CA and more. The enhancement logic consults the rules file in the whitelist, and look for the matching rule for that application trying to load the middleware library. The enhanced logic allow loading of the library and control the visibility and the objects as per the defined rules in the rules file. The logic also disables write access if not allowed in the rules file.

In effect, the middleware enhanced logic controls access to the middleware library based on rules for that specific application. The rules may also be bound to various other factors to help administrators achieve and implement PKI hardening. For instance, supplemental rules allow for binding to users and binding to systems, for example, names and type of users, also system information like hostname, IP or its range and other factors. The rules based bindings on users and systems helps narrow down the use of smart cards and unauthorized access to its public and private objects.

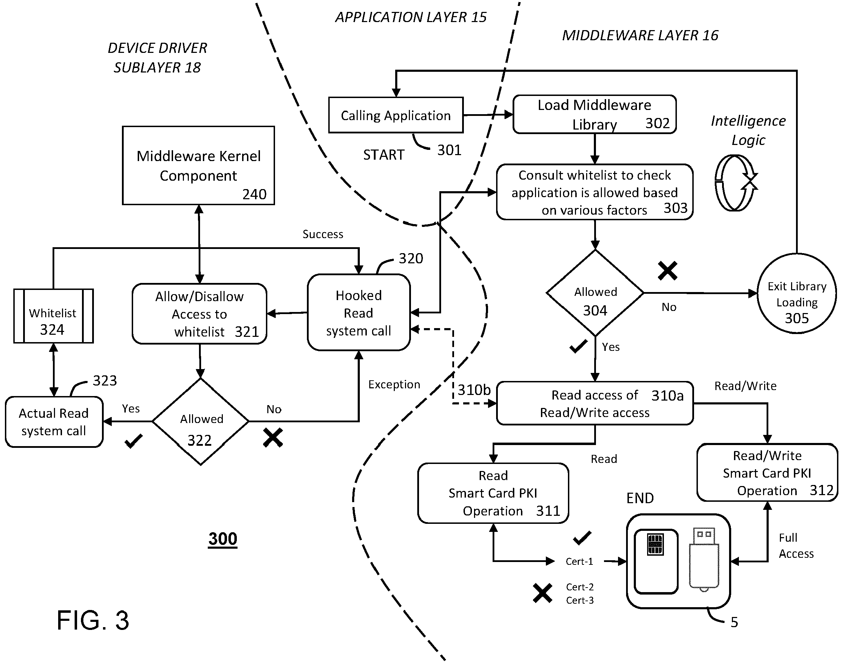

**FIG 3** depicts a flowchart **300** for an exemplary end-to-end flow of rules and enforcement on an application to prevent authenticator device misuse in accordance with an embodiment. More specifically, it illustrates relevant states of an end-to-end flow of allow or deny decisions made on the client side using all client components. Advantageously, there is no oversight or control from the server side; the rules set by IT administration communicated to the rule writer 230 and written to the whitelist 220 are enforced entirely on the client side by way of the enhanced middleware library 210 and associated kernel component 240 (see FIG 2). Actions within the flowchart 300 are performed at various layers within the software stack of the endpoint. The calling application is in the application layer 15. The enhanced middleware library 210 performs those actions 302-313 within the middleware layer 16. And, the middleware kernel component 240 performs its actions 320-324 at the system driver level within the sublayer 18.

The flowchart starts at step **301,** when a calling application attempts to load a middleware library. For example, suppose an employee of a company (user) wants to connect to the corporate VPN on their company issued laptop (endpoint). In order to connect, the endpoint presents a client authentication tool to authorize the user, which expects the user to insert their smartcard into the laptop and enter their credentials associated with the smart card. Here the client authentication tool is the calling application, and it will attempt to load the smart card middleware to communicate with the smart card reader at step **302.** The enhanced middleware library 210 will consult the whitelist 220 to check that this application is allowed based on various factors at step **303.** As a simple example, a basic entry by name for this application in the whitelist 220 will serve as confirmation that the calling application is authorized to communicate with the authenticator device.

But, in order for the enhanced middleware library 210 to check the whitelist 220 it needs to access the white list 220. It does this by issuing a system call to read the whitelist. Recall however that the middleware kernel component 240 intercepts system calls from the application when it tries to communicate with the middleware library (e.g., smart card middleware). Here, it will detect that the client authentication tool is trying to read the whitelist 220. As shown in **320,** the middleware kernel component 240 is hooked into the enhanced middleware library 210. Accordingly, the middleware kernel component 240 at step **321** will decide first on its own, whether to allow or disallow access to the whitelist. It will do this by looking to the whitelist 220 to determine if the calling application is allowed to even read the whitelist at step **322.** More specifically, the middleware kernel component 240 intercepts a system call to load the middleware library by the application and indirectly establish if the application is authorized to the enhanced middleware library (210). It is indirect in the sense that the enhanced middleware library only receives indication if the read was successful or not; the kernel component does not per se report the status.

If it determines that the application is not authorized to do a read operation, it will generate an exception after step **322,** which will then carry up as a NO, and back to step **304** decision block in the middleware layer 16, and will result in a NO decision, at which point the enhanced middleware library 210 will exit the loading of the middleware library. Accordingly, this prevents the calling application, the client authentication tool, from communicating at all with the smart card. The loading at step 302, consulting at step 303, and decision block 304 constitute a first part of the intelligence logic.

Conversely, if at step **322,** middleware kernel component 240 determines that the calling application is allowed to read the whitelist 220, it will enable the system call to complete an actual read operation on the whitelist 220 at step **324,** and will carry back up as a YES (for success) through the hooked system call at step **320** back to decision block **304** in the middleware layer 16. At this point the enhanced middleware library 210 will proceed to load the middleware library so that the calling application can communicate with the smart card. This corresponds to the juncture between the device driver sublayer 18 and the middleware layer 16. This is when the middleware kernel component 240 intercepts follow-up system calls to access the set of rules in the whitelist (220) and control an access type of the enhanced middleware library (210) for using the authenticator device.

At step **310,** the enhanced middleware library 210 will then inquire the whitelist 220 for an AccessType of the calling application. Notably, this also requires a system call to read the whitelist as shown in arrow 310b. Here again, the middleware kernel component 240 will decide on allowing/denying the system call to read the access types in the whitelist. The whitelist 220 includes AccessType, RuleType, and ActionType entries as explained ahead.

### AcessType:

- **READ_ONLY:** Application can access the Certificate, Public and Private keys and data object, but cannot make changes/delete or create new etc.
- **READ_WRITE:** Application can create keys/public and private keys and create or delete data objects
- **RESTRICTED:** Application cannot even access public objects, or try login related operation. This is default value for every binary which is not allowed in rules.
- **PUBLIC_ONLY:** Application can see and access public objects but cannot alter/update them, login is prohibited

Here, AccessType is one of READ_ONLY, READ_WRITE, RESTRICTED, and PUBLIC_ONLY. Continuing with the flowchart **300,** a determination of READ_WRITE access type at decision block **310** will allow the enhanced middleware library 210 to read and write smart PKI operations at step **312** on the smartcard. For instance, along this example path, the whitelist 220 indicated that the calling application was allowed to view and use all certificates 1, 2 and 3 on the smartcard with full access on read and write.

Conversely, determination of READ access type at decision block **310** will allow the enhanced middleware library 210 to only read smart PKI operations at step **311** on the smartcard. For instance, along this example path, the whitelist 220 indicated that the calling application was allowed to view and use only certificate 1 on the smartcard with limited access to read only, and denied view and use of certificates 2 and 3 on the smartcard. Understandably, determination of the remaining access types and action types will result in analogous access for the respective definition type. The other definition types in the whitelist are listed below:

### ActionType:

- **SIGN:** Allow all signature actions on allowed objects
- **ENCRYPT:** Allow encryption decryption on allowed objects
- **FULL:** Allow full access on actions, access will be decided by the AccessType
- **DATAOBJECTS:** Allow access to Data Objects

The whitelist 220 also includes entries for rules, including RuleType and RuleBinding. A brief review of the rules is in order, and follows. The RuleType specifies to the enhanced middleware library 210 how the calling application should be identified at step **303** and decision block **304.**

### RuleType:

- **ALLOW_BY_PATH:** Allow the binary with the name and its path, if path is different the rule will not work
- **ALLOW_BY_SIGN:** Allow the binary by its signature and attributes
- **ALLOW_BY_CA:** Allow binaries signed by certificate trusted by allowed certificate authority (CA)

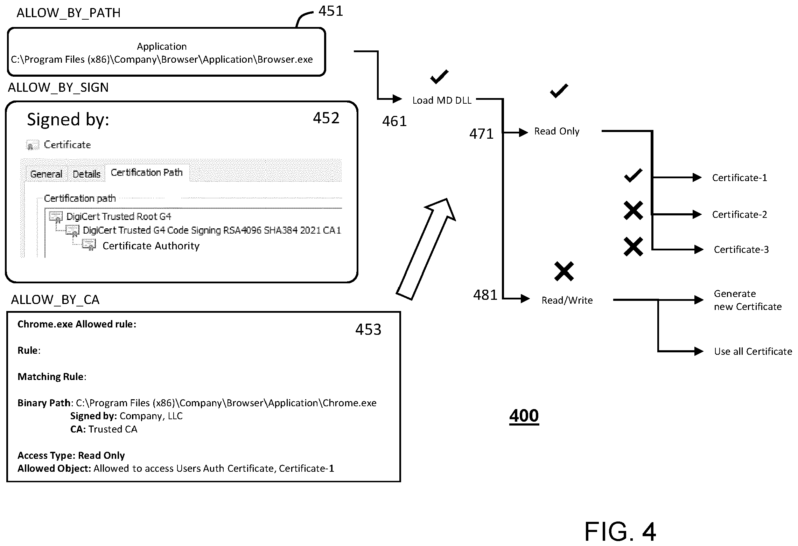

**FIG 4** illustrates exemplary rule types for an application entry in a whitelist in accordance with an embodiment. Event path 461 is the loading of the middleware library which corresponds to step 302 in FIG. 3. Recall, the next step 303 consults the whitelist to check if the calling application trying to load the middleware library is allowed based on various factors. These factors relate to the RuleType, for example, ALLOW_BY_PATH, ALLOW_BY_SIGN and ALLOW_BY_CA respectively corresponding to events 451, 452, and 454. These are discussed next. For any of them, if the calling application is allowed to load the middleware library. Here, event path 471 shows that the calling application in the example of FIG 3 is allowed read only access to certain authenticator device objects; namely, certificate-1 is readable, but the other two certificates on the authenticator device are not, which corresponds to step 311 in FIG 3. Event path 481 shows that the calling application is correspondingly not allowed read/write access to generate a new certificate or use all certificates.

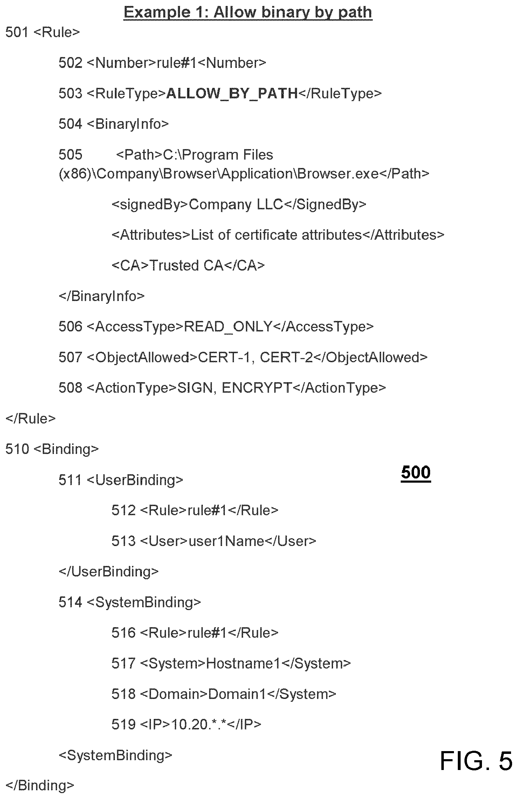

As seen in 451, of **FIG 4****,** the **ALLOW_BY_PATH** type designates that the calling application will be authorized if it is executing from the listed path. Here for example, if the calling application corresponds to that for the path C:\Program Files x86)\Company\Browser\ Application\Browser.exe listed in the whitelist it will be allowed. See also **FIG 5****,** which shows an exemplary whitelist rule 500 with "allow binary by path" rule as seen under <RuleType> 503 and showing the entry under <Path> 505 for making the determination. The entries of <AccessType> 506 shows the corresponding access type as READ_ONLY, <ObjectAllowed> 507 shows the allowed objects for the access type which are certificate 1 and certificate 2, and <ActionType> 508 for the permitted actions on those objects, for example, signing and encrypting.

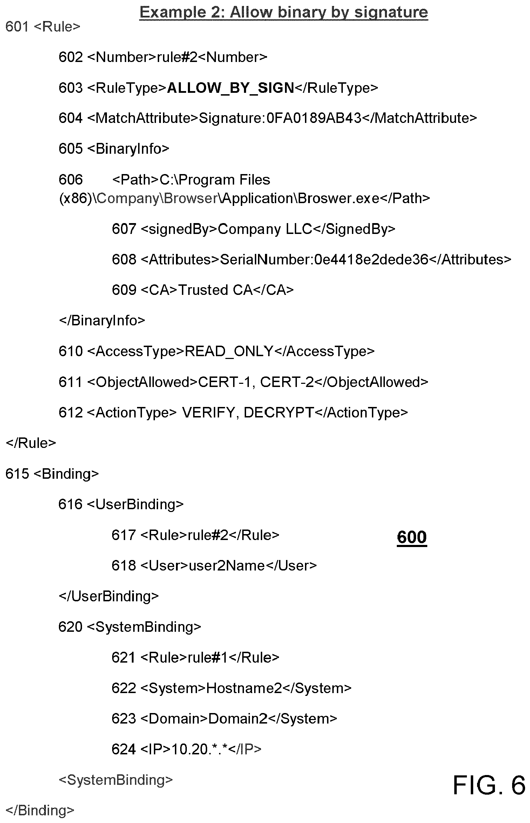

Alternatively, as seen in 452, of **FIG 3B,** the **ALLOW_BY_SIGN** type designates that the calling application will be authorized if it is signature is consistent with that listed in the whitelist for the corresponding matching attribute. Here for example, if the calling application has a signature to that corresponding and matching to the respective entry in the whitelist it will be allowed. See also **FIG 6****,** which shows an exemplary whitelist rule 600 with "allow binary by signature" rule as seen under <RuleType> 603 and showing the entry under <MatchAttributes> 604 of the respective signature numeric string for making the determination.

Alternatively, as seen in 453, of **FIG 3B,** the **ALLOW_BY_CA** type designates that the calling application will be authorized if its certificate authority is consistent with that listed in the whitelist for the corresponding attribute. See also **FIG 6****,** which shows an exemplary whitelist rule 600, that if it were for allow by CA, the entries of 607 <signedBy>Company LLC</SignedBy>, 608 <Attributes> SerialNumber:0e4418e2dede36 </Attributes>, and 609 <CA>Trusted CA</CA> would suffice for the matching rule.
The whitelist 220 also contains the following entries:

### RuleBinding:

- User Rule binding:
   ∘ User: ALL, NAME, PREFIX_Value, POSTFIX_Value
   ∘ UserType: ALL, ADMIN, LOCAL, SYSTEM, DOMAIN
- System Rule binding:
   ∘ HostName: Hostname, PREFIX_Value,POSTFIX_Value
   ∘ Domain: Domain Name
   ∘ IPRange: IP Address, START_IP, END_IP
- Temporal/Spatial Rule binding:
   ∘ Date(s), Time(s)
   ∘ Location

As seen in **FIGS 6****,** the USER entries correspond to 511 <UserBinding>, 512 <Rule>rule#1 </Rule>, and 513 <User>user1Name</User. The whitelisting and rule based engine can thus restrict which users (e.g. by name, role, location, etc.) may use the authenticator device. The SYSTEM entries correspond to 514 <SystemBinding>, 516 <Rule>rule#1</Rule>, 517 <System>Hostname1</System>, 518 <Domain>Domain1</System>, and 519 <IP>10.20.*.*</IP>. The whitelisting and rule based engine can thus restrict which systems, and/or how they are configured (e.g. network configurations: masking, gateway, IP address ranges) may use the authenticator device.

In some embodiments, the rule per application further defines whether access to the authenticator device (5) is allowed for said application and for a particular user such as time and date, and where the authenticator device (5) is accessible by the application and by the particular user such as geographic location, domain, and network.

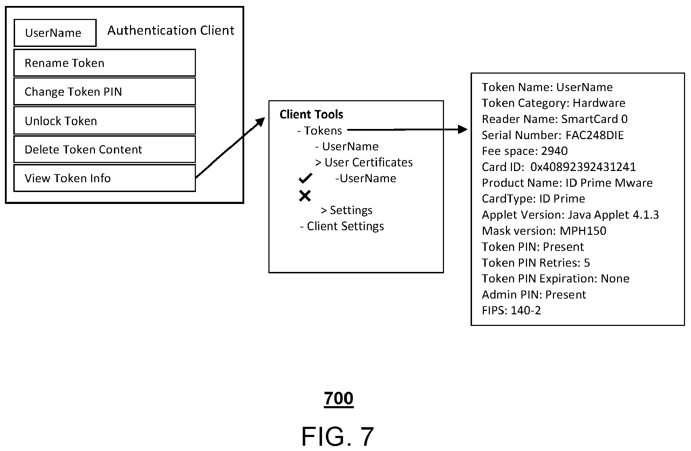

**FIG. 7** depicts an example of an authentication client tool 700 (application) limited by rule enforcement principles herein to only show token information for the authorized user in accordance with administrative whitelisting. Here, the user only sees those objects (i.e., UserName User Certificates) on the authenticator device (Hardware eToken) that were authorized on the whitelist and set in rules by IT administration. The user has no visibility on other certificates or objects, let alone, to the whitelist, and no access to operate on any other authenticator device resources than those exposed by the application.

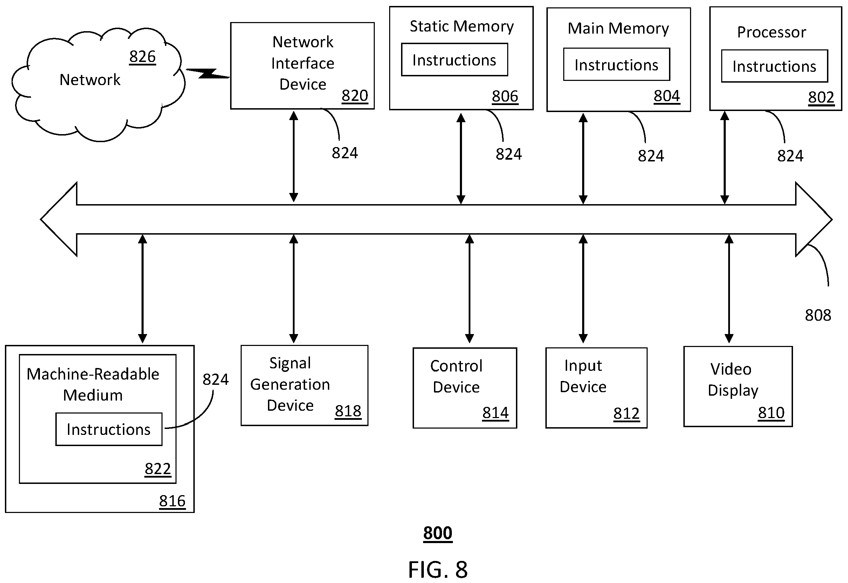

**FIG. 8** depicts an exemplary diagrammatic representation of a machine **800** and hardware platform suitable for use to perform the methods and steps exemplified above in system **100** and the components therein in accordance with various embodiments. For example method steps and operations of the Middleware server **250** and middleware client **200** and components therein, may be performed by a hardware processor of the machine **800** executing computer program code instructions (from software) from an electronic memory to execute the method steps. At least one a hardware processor of machine **800** can execute computer program code instructions from an electronic memory to execute processes above.

The machine **800** is shown in the form of a computer system within which a set of instructions, when executed, may cause the machine to perform any one or more of the methodologies discussed above. In some embodiments, the machine operates as a standalone device, such as a computer, laptop, mobile device, remote control, or display. In some embodiments, the machine may be connected over the network to other machines. In a networked deployment, the machine may operate in the capacity of a server or a client user machine in server-client user network environment, or as a peer machine in a peer-to-peer, or distributed, network environment.

The machine may comprise a server computer, a client user computer, a personal computer (PC), a tablet PC, a laptop computer, a desktop computer, a mobile device, a cell phone, a control system, a network router, switch or bridge, or any machine capable of executing a set of instructions (sequential or otherwise) that specify actions to be taken by that machine. It will be understood that a device of the present disclosure includes broadly any electronic device that provides voice, video or data communication. Further, while a single machine is illustrated, the term "machine" shall also be taken to include any collection of machines that individually or jointly execute a set (or multiple sets) of instructions to perform any one or more of the methodologies discussed herein.

The computer system **800** may include a processor **802** (e.g., a central processing unit (CPU), a graphics processing unit (GPU, or both), a main memory **804** and a static memory **806,** which communicate with each other via a bus 808. The computer system **800** may further include a video display unit **810** (e.g., a liquid crystal display or LCD), a flat panel, a solid state display, or a cathode ray tube (CRT)). The computer system **800** may include an input device **812** (e.g., a keyboard, touchless sensing unit 110), a cursor control device **814** (e.g., a mouse, keyboard), a disk drive unit **816,** a signal generation device **818** (e.g., a speaker or remote control) and a network interface device **820.**

A middleware client (200) to prevent misuse of an authenticator device by enforcing a rule based engine comprising one or more processors, and a memory coupled to the one or more processors, the memory containing computer instructions which when executed causes the one or more processors to perform any of the aforementioned steps.

The terms "include" and "comprise" as well as derivatives thereof, in all of their syntactic contexts, are to be construed without limitation in an open, inclusive sense, ( e.g. , " including, but not limited to " ). The term "or," is inclusive, meaning and / or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like. Unless the context requires otherwise, throughout the specification and claims which follow, the word "comprise" and variations thereof, such as, "comprises" and "comprising," are to be construed in an open, inclusive sense, e.g., "including, but not limited to."

Reference throughout this specification to "one embodiment" or "an embodiment" or "some embodiments" and variations thereof mean that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or idea.

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

When so arranged as described herein, each computing device or processor may be transformed from a generic and unspecific computing device or processor to a combination device comprising hardware and software configured for a specific and particular purpose providing more than conventional functions and solving a particular technical problem with a particular technical solution. When so arranged as described herein, to the extent that any of the inventive concepts described herein are found by a body of competent adjudication to be subsumed in an abstract idea, the ordered combination of elements and limitations are expressly presented to provide a requisite inventive concept by transforming the abstract idea into a tangible and concrete practical application of that abstract idea.

The headings and Abstract of the Disclosure provided herein are for convenience only and do not limit or interpret the scope or meaning of the embodiments. The various embodiments described above can be combined to provide further embodiments. Aspects of the embodiments can be modified, if necessary to employ concepts of the various patents, application and publications to provide further embodiments.

## Claims

1. A system to mitigate misuse of an authenticator device (5) by enforcing a rule based engine, the system comprising,
on a server side:
a middleware server (250) to establish rules on applications for authenticator device usage; and
a user interface (260) coupled to the middleware server (250) for entry of rules;
on a client side:
a middleware client (200) comprising:
- a whitelist (220) containing rules for accessing the authenticator device (5), wherein the rules indicate which applications have access to the authenticator device (5);
- a rule writer (230) that when connected to the middleware server (250) retrieves a set of rules there from and writes the set of rules to the whitelist (220);
- an enhanced middleware library (210) that controls a loading of a middleware library, whereby it allows or denies the loading according to the whitelist (220);
wherein when the application is allowed and loads the middleware library, the enhanced middleware library (210) further retrieves and enforces the set of rules on the application for using the authenticator device (5),
wherein when the application is denied, the enhanced middleware library (210) does not load the middleware library and the application is denied access to the authenticator device;
and
- a middleware kernel component (240) to protect the set of rules in the white list, and allow the rule writer (230) and enhanced middleware library (210) access to the whitelist (220), whereby it
intercepts a system call to load the middleware library by the application and establish if the application is authorized to the enhanced middleware library (210);
intercepts follow-up system calls to access the set of rules in the whitelist (220) and control an access type of the enhanced middleware library (210) for using the authenticator device,
wherein the authenticator device is one among a smart card, an eToken, a USB module, or security key.

2. The system of claim 1, where the loading of the middleware library by the application is denied by default when the whitelist does not include an entry for the application or when no rules are provided for the application.

3. The system of claim 1, wherein upon when the application is allowed and loads the middleware library, enhanced middleware library (210) retrieves rules from the whitelist (220) indicating read and write access of the application to the authenticator device (5),
wherein the rules are chosen from one or more among an AccessType, a RuleType, and a RuleBinding.

4. The system of claim 1, wherein the whitelist (220) contains a list of applications and rules associated with each application, wherein a rule per application defines:
how an executing application is identified,
what kind of access to the authenticator device (5) is provided,
when access to the authenticator device (5) is allowed,
where the authenticator device (5) is accessible.

5. The system of claim 4, wherein how an executing application is identified includes determining application attributes comprising signature verification of application, path of application binary, or process ID of the application,

6. The system of claim 5, wherein the enhanced middleware library (210) matches criteria in the whitelist (220) with actual attributes of the application that is executing.

7. The system of claim 4, wherein the kind of access provided to the authenticator device (5) includes access to read only, write only, or read/write operations thereon.

8. The system of claim 4, wherein the kind of access provided to the authenticator device (5) includes access to PKI operations thereon such as encrypt, decrypt, hash, authenticate, sign and signature verify.

9. The system of claim 4, wherein the kind of access provided to the authenticator device (5) includes access to PKI objects thereon such as certificates, keys, PINs, and ID.

10. The system of claim 1 wherein the middleware server (250) is configured to recognized one or more endpoints by IP addresses each with their own instance of the rule writer (230), and each rule writer (230) knows an IP addresses of the the middleware server (250) for secure communications, whereby the middleware server (250) pushes the whitelist (220) to the rule writer (230) after establishment of the secure communications.

11. The system of claim 4, wherein the enhanced middleware library (210) prevents unauthorized and unrecognized apps from accessing authenticator device (5) functions, objects or resources embedded on the authenticator device (5).

12. A middleware client (200) to mitigate misuse of an authenticator device (5) by way of a rule based enforcement engine, the middleware client comprising:
- a whitelist (220) containing rules for accessing the authenticator device (5), wherein the rules indicate which applications have access to the authenticator device (5);
- a rule writer (230) that when connected to a middleware server (250) retrieves a set of rules there from and writes the set of rules to the whitelist (220);
- an enhanced middleware library (210) that controls a loading of a middleware library, whereby it allows or denies the loading according to the whitelist (220),
wherein when the application is allowed and loads the middleware library, the enhanced middleware library (210) retrieves and enforces the set of rules on the application for using the authenticator device,
wherein when the application is denied, the enhanced middleware library (210) does not load the middleware library and the application is denied access to the authenticator device (5); and
- a middleware kernel component (240) to protect the set of rules in the white list, and allow the enhanced middleware library (210) access to the whitelist (220), whereby it
intercepts a system call to load the middleware library by the application and establish if the application is authorized to the enhanced middleware library (210);
intercepts follow-up system calls to access the set of rules in the whitelist (220) and control an access type of the enhanced middleware library (210) for using the authenticator device,
wherein the loading of the middleware library by the application is denied by default when no rules are provided in the whitelist for the application,
wherein upon when the application is allowed and loads the middleware library, enhanced middleware library (210) retrieves rules from the whitelist (220) indicating read and write access of the application to the authenticator device (5), and
wherein the authenticator device is one among a smart card, an eToken, a USB module, or security key.

13. The middleware client (200) of claim 12, wherein the whitelist (220) contains a list of applications and rules assocated with each application, wherein a rule per application defines:
how an executing application is identified using application attributes such as signature verification of application, path of application binary, and process ID of the application;
what kind of access to the authenticator device (5) is provided, including:
access to read only, write only, or read/write operations thereon;
access to PKI operations thereon such as encrypt, decrypt, hash, authenticate, sign and signature verify; and
access to PKI objects thereon such as certificates, keys, PINs, and ID.

14. The middleware client (200) of claim 13, wherein the rule per application further defines:
when access to the authenticator device (5) is allowed for said application and for a particular user such as time and date, and
where the authenticator device (5) is accessible by the application and by the particular user such as geographic location, domain, and network.

15. The middleware client (200) of claim 13, wherein the white list includes definition types for
AccessTypes: READ_ONLY, READ_WRITE, RESTRICTED and PUBLIC_ONLY; ActionTypes: SIGN, ENCRYPT, FULL, DATAOBJECTS;
RuleTypes: ALLOW_BY_PATH, ALLOW_BY_SIGN, ALLOW_BY_CA; and RuleBindings: user, system.
